Europäisches Patentamt

European Patent Office

Office européen des brevets

(19)

(11) Veröffentlichungsnummer: **0 226 825 B1**

(12) **EUROPÄISCHE PATENTSCHRIFT**

(45) Veröffentlichungstag der Patentschrift: **29.08.90**

(21) Anmeldenummer: **86116060.4**

(22) Anmeldetag: **20.11.86**

(51) Int. Cl.⁵: **B 29 C 65/02,** B 29 C 65/66 // B29L31:18

(54) **Verbinden von Hohlprofilkörpern mit einer Kunststoffplatte, insbesondere zum Herstellen von Wärmetauschern.**

(30) Priorität: **16.12.85 DE 3544405**
**28.04.86 DE 3614322**

(43) Veröffentlichungstag der Anmeldung:
**01.07.87 Patentblatt 87/27**

(45) Bekanntmachung des Hinweises auf die Patenterteilung:
**29.08.90 Patentblatt 90/35**

(84) Benannte Vertragsstaaten:
**AT BE CH DE FR GB IT LI NL SE**

(56) Entgegenhaltungen:
DE-A-2 502 181     US-A-2 876 496
DE-A-3 338 157     US-A-3 462 362
DE-B-1 209 725     US-A-3 545 168
FR-A-1 369 997     US-A-4 219 525

H. DOMININGHAUS: "Die Kunststoffe und ihre Eigenschaften", 1976, VDI-Verlag, Düsseldorf, DE

(73) Patentinhaber: **AKZO N.V.**
**Velperweg 76**
**NL-6824 BM Arnhem (NL)**

(72) Erfinder: **Gemeinhardt, Hermann**
**Rosenstrasse 32**
**D-8753 Obernburg/Main (DE)**
Erfinder: **Korstanje, Hugo Peter**
**Jachtlaan 8**
**NL-6891 CK Rozendaal (NL)**

(74) Vertreter: **Fett, Günter**
**Akzo Patente GmbH Kasinostrasse 19 - 23**
**D-5600 Wuppertal 1 (DE)**

Courier Press, Leamington Spa, England.

**Beschreibung**

Die Erfindung betrifft ein Verfahren zum bleibenden Befestigen des oder der Enden von mindestens einem aus thermoplastischem Kunststoff bestehenden, jeweils mindestens einen durchgehenden Hohlraum aufweisenden Stab in mindestens einer mindestens einen Stab umfassenden Öffnung einer Stützplatte, bei dem jeder Stab zu seiner Befestigung in der für ihn vorgesehenen Öffnung der Stützplatte positioniert wird, anschließend die Stabenden erwärmt, mindestens teilweise erweicht, erweitert und mit der Stützplatte verklebt werden, wobei jeder Stabhohlraum einen hydraulischen Durchmesser aufweist, der mindestens 10% der dünnsten Wandstärke des Stabes entspricht, die Stabwände Poren aufweisen können, die maximal 20% des Wandvolumens ausfüllen, und die Stützplatte zumindest im Bereich der Öffnungen aus thermoplastischem Kunststoff besteht, insbesondere zum Herstellen von Wärmetauschern.

Die Erfindung betrifft auch einen Wärmetauscher, bestehend aus einer Anzahl von thermoplastischen, jeweils mindestens einen durchgehenden Hohlraum aufweisenden Stäben, deren Enden bleibend mit mindestens einer Stützplatte verbunden sind, wobei sich die Hohlräume zum Ende der thermoplastischen Stäbe hin erweitern.

Ein gattungsgemäßes Verfahren und ein gattungsgemäßer Wärmetauscher ist aus der DE—OS 33 38 157 bekannt. Bei dem bekannten Verfahren werden die Rohre in einen als Lochboden ausgebildeten Rohrboden eingeführt. Danach werden die Rohrenden mit dem Rohrboden über einen Ultraschallkopf verschweißt. Die Herstellung einer als Ultraschallkopf geeigneten Sonotrode ist sehr teuer. Entweder muß bei dem bekannten Verfahren jedes Rohrende einzeln mit dem Rohrboden verschweißt werden, was sehr aufwendig ist, oder man benötigt für jede gewünschte Rohranordnung und/oder -zahl eine eigens dafür hergestellte Sonotrode. Werden die Rohrenden einzeln mit dem Rohrboden verschweißt, können sich außerdem einzelne, bereits verschweißte Rohrenden infolge der Wärmeeinwirkung beim Verschweißen benachbarter Rohrenden wieder teilweise lösen. Die Außenkontur der Sonotroden kann kegelförmig gewählt werden. Wenn eine derartige Sonotrode zum Verschweißen der Rohrenden mit dem Rohrboden eingesetzt wird, weist jedes Rohrende am Rohrboden des fertigen Wärmetauschers zum Ende hin eine kegelförmige Erweiterung auf. Diese Erweiterung begünstigt die Zu- und Abfuhr des im Wärmetauscher strömenden Mediums. Man erreicht durch diese Erweiterungen einen geringeren Druckabfall beim Einströmen des Strömungsmittels in die Rohre, was nicht immer erwünscht ist, beispielsweise, wenn der nach diesen Verfahren hergestellte Wärmetauscher als Verdampfer verwendet werden soll. Der nach dem bekannten Verfahren hergestellte Wärmetauscher weist an jedem Rohrausgangsende eine ringwulstförmige Erhebung auf der Stirnseite des Rohrbodens auf. Außerdem ist eine klare Grenzlinie zwischen Rohrwerkstoff und Rohrbodenwerkstoff beim Blick auf die Stirnseite des Rohrbodens sichtbar.

Der Effekt der Aufweitung thermoplastischer Rohre mittels kontaktloser Erwärmung ist beispielsweise in den US-Patentschriften 4.219.525, 3.545.168 und 2.876.496 beschrieben, der jedoch in keinem der Fälle zur Verklebung der Rohrenden mit einer Stützplatte genutzt wird. Vielmehr dient die mit der Aufweitung einhergehende teilweise Plastifizierung der Rohrenden dazu, in einem darauffolgenden Arbeitsschritt mittels geeigneter Formgebungsmittel die Rohrenden zu verschließen. Es handelt sich dabei nicht um die Herstellung vom Wärmetauschern.

Aus der DE—A—12 09 725 ist bekannt, thermoplastische Hohlfäden durch kontaktlose Erwärmung an den Enden ganz oder teilweise zu verschließen und untereinander zu verbinden, wobei keine Stützplatte zur Aufnahme der Hohlfäden vorgesehen ist.

Aufgabe der vorliegenden Erfindung ist es, ein besonders einfaches Verfahren der eingangs genannten Art insbesondere zum Herstellen eines Wärmetauschers zur Verfügung zu stellen, bei dem außerdem keine teuren Werkzeuge erforderlich sind, welches außerdem unabhängig von der gewünschten Anordnung der Stäbe durchgeführt werden kann. Es ist weiterhin Aufgabe der vorliegenden Erfindung, einen besonders preisgünstigen Wärmetauscher zur Verfügung zu stellen. Bevorzugt sollen Stützplattenwerkstoff und Stabwerkstoff nahtlos ineinander übergehen, das heißt, es soll keine sichtbare Grenze zwischen Stützplattenwerkstoff und Stabwerkstoff mehr sichtbar sein. Es soll auch ein Wärmetauscher zur Verfügung gestellt werden, der sich zum Einsatz als Verdampfer eignet.

Die erfindungsgemäß gestellte Aufgabe wird bei einem gattungsgemäßen Verfahren dadurch gelöst, daß die Enden der Stäbe im wesentlichen vertikal nach oben und die Stützplatte im wesentlichen horizontal angeordnet werden, daß dann von oben her den Stabenden ohne mechanische Kraftausübung und kontaktlos soviel Wärme zugeführt wird, daß sich die Außenwände der Stabenden nach ihrer Erweichung derart erweitern, daß diese sich an die Wände der Stützplattenöffnungen anlegen und mit diesen verkleben, wobei ein Verkleben des Wärmetauschers mit der Wärmequelle unterbleibt.

Die Stützplatte muß hierbei zumindest im Bereich der Öffnungen aus einem Material bestehen, mit dem die verwendeten Stäbe bei Anwendung des erfindungsgemäßen Verfahrens verkleben können.

Es ist nämlich gefunden worden, daß dann, wenn die Stäbe nahezu vertikal angeordnet sind, sich die oberen Enden der Stäbe nach außen aufweiten, wenn das thermoplastische Stabmaterial den teigigen Zustand erreicht hat. Dieser Umstand wird bei dem erfindungsgemäßen Verfahren ausgenutzt. Infolge der Wärmestrahlung weiten sich die Stabenden auf und legen sich dann an die Innenseite der Öffnungen der Stützplatte an und verkleben mit dieser bei weiterer Wärmezufuhr. Die Wärmezufuhr kann wie bereits erwähnt, durch Wärmestrahlung, beispielsweise durch eine Heizplatte erfolgen. Sie kann aber auch durch Schallwellen, Licht, elektromagnetische Wellen, heiße Gase, o.ä. erfolgen. In Spezialfällen kann die thermische Behandlung unter Vakuum oder Schutzgasatmosphäre durchgeführt werden.

Die zur Durchführung des erfindungsgemäßen Verfahrens benötigte Wärmemenge kann durch einfache Versuche bestimmt werden. In der Regel wird die thermische Behandlung unter Einhaltung folgender Bedingungen durchgeführt:

$$0,0175 < Qe \left( \frac{t}{\rho c_p \lambda} \right)^{1/2} < 0,5,$$

wobei

Q die zugeführte Wärmemenge, pro Fläche (Stirnseite) und Zeit in $J/m^2 s$

e der lineare Ausdehnungskoeffizient des Stabmaterials in I/K,

t die Zeitdauer der Wärmeeinwirkung in sec,

$\rho$ die Dichte des Stabmaterials in $kg/m^3$,

$c_p$ die spezifische Wärme des Stabmaterials in J/kg K, und

$\lambda$ die Wärmeleitfähigkeit des Stabmaterials in J/msK ist.

Der Grad der Ausweitung der Stabenden wird am günstigsten dadurch beeinflußt, daß Stäbe aus einem thermoplastischen Kunststoff verwendet werden, welcher im Bereich zwischen Raumtemperatur und Schmelztemperatur einen mittleren linearen Ausdehnungskoeffizient zwischen $100 \cdot 10^{-6}$ und $400 \cdot 10^{-6}$ 1/K besitzt.

Besonders günstig ist es, wenn die Stützplatte zumindest im Bereich der Öffnungen aus thermoplastischem Kunststoff besteht, und den Stabenden soviel Wärme zugeführt wird, daß die Stabenden mit der Stützplatte verschmelzen. Das Einführen der Stäbe in die in der Stützplatte vorgesehenen Öffnungen wird dadurch erleichtert, daß Stützplatten verwendet werden, deren Öffnungen zumindest in einer Querschnittsdimension um einen Betrag, der mindestens 20% der Wanddicke des Stabes beträgt, größer ist als die entsprechende Außenquerschnittsdimension des Stabes. Es hat sich auch gezeigt, daß auf diese Weise die Festigkeit der Verbindungsstelle zwischen Stab und Stützplatte besonders günstig beeinflußt werden kann.

Das erfindungsgemäße Verfahren gelingt vorzüglich, wenn Stäbe verwendet werden, die eine Porosität bis zu 10% des Wandvolumens aufweisen können, deren hydraulischer Durchmesser jedes Hohlraumes zwischen 0,3 und 15 mm, vorzugsweise zwischen 0,5 und 7,5 mm, und deren Wandstärke an der dünnsten Stelle zwischen 5 und 25% des hydraulischen Durchmessers, vorzugsweise zwischen 7,5 und 17,5% des hydraulischen Durchmessers liegt. Bekanntlich ist der hydraulische Durchmesser ($d_h$) definiert als Quotient der vierfachen Innenquerschnittsfläche eines Kanals des Stabes geteilt durch den benetzten Innenumfang (siehe hierzu Dubbel, Taschenbuch für den Maschinenbau, 13. Auflage, 1970, Seite 314, Absatz 4):

$$d_h = \frac{4 \cdot \text{Innenquerschnittsfläche}}{\text{benetzter Innenumfang}}.$$

Bevorzugt werden Stützplatten verwendet, deren Öffnungsquerschnittsflächen zumindest zur Stirnseite hin erweitert sind gegenüber dem Außenquerschnitt der verwendeten Stäbe bzw. Stabgruppen. Hierbei sollten die Stäbe derart positioniert werden, daß die Stabenden zumindest in die Erweiterungen der Stützplattenöffnungen hineinreichen. Die Art der Querschnittsvergrößerung bzw.—erweiterung zur Stirnseite der Stützplatte hin beeinflußt die Innenkontur des Stabes, die durch die Wärmebehandlung erreicht wird. Erfolgt die Querschnittserweiterung der Öffnungen der Stützplatte zur Stirnseite hin stetig, weisen die Stabinnenquerschnitte in Richtung des Stabinneren eine Verengung auf, deren Fläche etwa 10 bis 60% von der Fläche des Innenquerschnitts beträgt, und die nach innen dann auf den Stabinnenquerschnitt übergeht. Ist der Querschnitt der Stützplattenöffnungen zur Stirnseite hin sprunghaft erweitert, weist die Innenseite des Stabendes keine oder eine kaum noch wahrnehmbare Verengung des Innenquerschnitts auf.

Als besonders günstig hat es sich herausgestellt, wenn die Stäbe vor der thermischen Behandlung derart in den Öffnungen der Stützplatte positioniert werden, daß die Stabenden die Stirnseite der Stützplatte 1 bis 2 mm überragen.

Die Haltbarkeit der Verbindungsstelle zwischen Stab und Stützplatte kann dadurch günstig beeinflußt werden, daß nach dem Positionieren, jedoch vor der thermischen Behandlung der Stäbe ein ggf. vorhandener Zwischenraum zwischen Außenmantel der Stäbe und den Öffnungen der Stützplatte zumindest teilweise mit Polymerpulver ausgefüllt wird. Vorteilhaft wird Polymerpulver verwendet, welches eine Schmelztemperatur besitzt, die etwa 5 bis 50°C, vorzugsweise 20 bis 50°C unterhalb der Schmelztemperatur des Stabwerkstoffs liegt. Ein Polymerpulver mit einer durchschnittlichen Teilchengröße von 20 bis 100 µm, vorzugsweise von 40 bis 100 µm wird bevorzugt verwendet. Bei einer Teilchengröße von mehr als 100 µm ergibt sich in vielen Fällen eine unerwünschte, inhomogene Oberfläche.

Das erfindungsgemäße Verfahren gelingt vorzüglich, wenn Stützplatte, Stäbe und ggf. das Polymerpulver aus thermoplastischen Polymeren bestehen, die von ihrer Grundstruktur zu derselben Polymersorte gehören und/oder denselben oder nahezu denselben Schmelzpunkt bzw. Schmelzbereich besitzen.

Der nach dem erfindungsgemäßen Verfahren hergestellte Wärmetauscher weist eine Reihe von Merkmalen auf, aufgrund derer sich der nach dem erfindungsgemäßen Verfahren hergestellte Wärmetauscher von den bisher hergestellten Wärmetauschern unterscheidet. Wird ein Wärmetauscher beispielsweise nach dem aus der DE—OS 33 38 157 bekannten Verfahren hergestellt, so bleibt die Stirnseite der Stützplatte bzw. des Rohrbodens nicht glatt, sind Stützplattenwerkstoff und Stabwerkstoff nicht nur wegen der ringwulstförmigen Erhöhung auf der Stirnseite der Stützplatte deutlich sichtbar gegeneinander abgegrenzt, und weisen die Innenseiten der Stabenden Spuren von den verwendeten Kontaktsonotroden auf. Die Stirnseite eines nach dem erfindungsgemäßen Verfahren hergestellten Wärmetauschers weist das typische Aussehen eines aus der Schmelze erstarrten thermoplastischen Materials aus, das mit der Oberfläche einer Kreppsohle (Schuhsohle) verglichen werden kann: die Oberfläche der Stirnseite erweckt den Eindruck, als sei sie leicht blasig.

Zwischen Stützplattenwerkstoff und Stabwerkstoff ist auch beim Schnitt durch die Platte und die Röhre bei nach dem erfindungsgemäßen Verfahren hergestellten Wärmetauschern ein Übergang nicht mehr feststellbar. Auch weist die Oberfläche des Stützplattenwerkstoffes den dem Fachmann bekannten, für das der Schmelze erstarrte Thermoplaste typischen Glanz auf.

Die erfindungsgemäß gestellte Aufgabe wird deshalb auch von einem Wärmetauscher gelöst, welcher aus einer Anzahl von thermoplastischen, jeweils mindestens einen durchgehenden Hohlraum aufweisenden Stäben besteht, deren Enden bleibend mit mindestens einer Stützplatte verbunden sind, wobei sich die Hohlräume zum Ende der thermoplastischen Stäbe hin erweitern und dessen Stirnseite ein kreppsohlenartiges Aussehen aufweist, und welcher nach dem erfindungsgemäßen Verfahren herstellbar ist.

In der Regel zeichnet sich der erfindungsgemäße Wärmetauscher auch dadurch aus, daß jedes Stabende mit der Stützplatte zumindest bis zu einer Tiefe, die der dünnsten Wandstärke des Stabes entspricht, von der Stirnseite der Stützplatte der gesehen verschmolzen ist.

Wie bereits oben erwähnt, zeichnet sich der erfindungsgemäße Wärmetauscher in der Regel dadurch aus, daß das Stabmaterial derart mit dem Stützplattenmaterial verschmolzen ist, daß ein stetiger Übergang zwischen den beiden Materialien erfolgt.

Die Stäbe des Wärmetauschers können als Röhren ausgebildet sein, die einen oder mehrere durchgehende Hohlräume aufweisen, deren hydraulischer Durchmesser (des einzelnen Hohlraumes) zwischen 0,5 und 15 mm und deren Wandstärke an der dünnsten Stelle zwischen 5 und 25% des hydraulischen Durchmessers liegt. Die erfindungsgemäßen Wärmetauscher können auch Stäbe enthalten, die aus zu Gruppen zusammengesetzten Rohren bestehen. Diese Rohrgruppen können äußerlich die Form einer Platte aufweisen, nämlich dann, wenn die Rohre achsparallel nebeneinanderliegen und die Achsen auf einer geraden Linie angeordnet sind, sie können aber auch die Form einer profilierten oder einer spiraligen Platte annehmen. Im Falle einer spiraligen Platte liegen die Röhren einer Gruppe nebeneinander, wobei deren Achsen auf einer (gedachten) spiralenförmigen Linie angeordnet sind. Eine solche Röhrengruppe kann aus 2 bis 100000, vorzugsweise 2 bis 20 000 Röhren bestehen.

Werden die erfindungsgemäßen Wärmeaustauscher als Verdampfer verwendet, so weist der erfindungsgemäße Wärmetauscher bei jeder Erweiterung des Innenquerschnitts der Stabenden in Richtung des Stabinneren eine Verengung auf einen Querschnitt auf, dessen Fläche etwa 10 bis 60% von der Fläche des Innenquerschnitts beträgt, wobei diese Verengung nach innen dann auf den Stabinnenquerschnitt übergeht. Ein solcher Wärmetauscher ist dadurch gekennzeichnet, daß jede Erweiterung des Innenquerschnitts der Stabenden sich in Richtung des Stabinneren auf einen Querschnitt verengt, dessen Fläche etwa 10 bis 60% von der Fläche des Innenquerschnitts beträgt, bevor sie auf den Stabinnenquerschnitt übergeht. Die Fläche des verengten Querschnitts weist bevorzugt etwa 20 bis 50% von der Fläche des Innenquerschnitts auf.

Die erfindungsgemäßen Wärmetauscher können zumindest teilweise aus thermoplastischem Polymer bestehen, welches zu den Fluorpolymeren gehört. Sie können aber auch zumindest teilweise aus Polyäthylen oder aus Polypropylen bestehen.

Der Vorteil des erfindungsgemäßen Verfahrens liegt unter anderem auch darin, daß die Herstellung der Verbindungsstelle zwischen Stab und Stützplatte ohne mechanische Kraftausübung erfolgt und somit auch an den Stabenden keine Spuren eines beispielsweise zur Kraftausübung verwendeten Stempels aufweist, weil derartige Werkzeuge zur Durchführung des erfindungsgemäßen Verfahrens nicht erforderlich sind. Die zur Durchführung des erfindungsgemäßen Verfahrens erforderliche Anpreßkraft der Stäbe an die Stützplattenöffnungswände erfolgt allein durch die sich durch die thermische Behandlung ergebende Erweiterung der Stabenden. Außerdem ist die Querschnittsfläche der Wärmequelle lediglich noch abhängig vom Außendurchmesser der Stützplatte, so daß dieselbe Wärmequelle verwendet werden kann unabhängig davon, welche Art, Anordnung und Anzahl der Stäbe verwendet wird, solange die Querschnittsfläche der Wärmequelle ausreichend dimensioniert ist. Das erfindungsgemäße Verfahren wird kontaktlos durchgeführt, so daß ein Verkleben des Wärmetauschers mit der Wärmequelle unterbleibt. Die Stirnseite der Stützplatte weist bei Anwendung des erfindungsgemäßen Verfahrens auch nicht die bei Anwendung von Kontaktkörpern typische haarige Oberfläche auf.

Unter den Begriff "Warmetauscher" fallen im Sinne der Erfindung auch Stoffaustauscher für Gase sowie Schalldämpfer für Gas- oder Flüssigkeitsstrahlen.

Die Erfindung wird anhand der nachfolgenden Beispiele näher erläutert.

Die Eigenschaften der in den nachfolgenden Beispielen verwendeten Kunststoffe sind in der Tabelle zusammengestellt.

TABELLE

| Eigenschaft | Bestimmung nach | Einheit | PVDF Typ I | PVDF Typ II | PP |
|---|---|---|---|---|---|
| Dichte | ASTM D 792 | g/cm$^3$ | 1,78 | 1,78 | 0,905 |
| "Melt flow index" | ASTM D 1238 | | | | |
| −230°C, 10 kg | | g/10 min | 50 | 13 | — |
| −230°C, 5 kg | | g/10 min | 18 | 4 | 9 |
| −230°C, 2,16 kg | | g/10 min | 6 | 1 | 2 |
| kristalliner Schmelzpunkt | | °C | 177 | 177 | 160—166 |
| linearer Ausdehnungs- koeffizient | ASTM D 696 | K$^{-1}$ | $106 \times 10^{-6}$ | $128 \times .10^{-6}$ | $150 \times 10^{-6}$ |
| Wärmeleitfähigkeit | ASTM C 177 | W/m · K | 0,19 | 0,19 | 0,22 |
| Spezifische Wärme zwischen 0 und 100°C | | J/kg · K | 960 | 960 | 1700 |
| Zugfestigkeit 5 mm/min | ASTM D 638 | MPa | 57 | 54 | 35 |
| Bruchdehnung 5 mm/min | ASTM D 638 | % | 12 | 80 | 700 |
| Modul bei 1 mm/min | ASTM D 638 | MPa | 2600 | 2400 | 1300 |

Beispiel 1

In einer Platte aus PVDF Typ I (siehe Tabelle), deren Außenabmessungen 101 mm×50 mm×15 mm betragen, sind 28 durchgehende, zur Oberfläche (101 mm×50 mm) senkrecht angeordnete Schlitze vorgesehen, von denen jeder 40 mm lang und 2 mm breit ist. Die Schlitze liegen parallel nebeneinander und verlaufen parallel zur Breitseite mit der Abmessung 50 mm. Der Steg zwischen den Schlitzen beträgt 3,5 mm. Von etwa 1 mm unterhalb der Oberfläche, der späteren Stirnseite, an, bis zur Stirnseite erweitern sich die Schlitze allseitig, wobei die Kontur der Erweiterungen gegenüberliegender Seiten einen Winkel von 60° einschließt. Dadurch ergibt sich, daß auf der Stirnseite jeder Schlitz eine Öffnung von etwa 41,2 mm×3,2 mm aufweist.

In jeden Schlitz wird ein Stab aus PVDF Typ I eingeführt, welcher jeweils 1 m lang, 40 mm breit und 2 mm dick ist. Jeder Stab weist 20 durchgehende Hohlräume mit einem hydraulischen Durchmesser von 1,6 mm auf, wobei der Mittenabstand zwischen zwei benachbarten durchgehenden Hohlräumen 2 mm beträgt. Die dünnste Wandstärke zwischen Hohlraum und Stabaußenseite beträgt 0,2 mm. Die Stäbe werden derart positioniert, daß die Enden der Stäbe die Stirnseite der Platte 1,5 mm überragen, die Stäbe selbst vertikal angeordnet sind und die Erweiterung der Schlitze und somit die Stirnseite nach oben gerichtet ist.

Nun wird eine flache, eine Oberfläche von 50 cm×50 cm aufweisende Heizplatte mit einem Emissionskoefizient von 0,9 und einer Temperatur von 430°C zwei Minuten lang in einem Abstand von einem Zentimeter von der Stirnseite gegen die PVDF-Platte gerichtet und dann wieder entfernt.

Beim Betrachten der Stirnseite stellt man fest, daß nunmehr jeder Stab am Ende nach außen gebogen ist und sich an die Erweiterung der Schlitze angelegt hat. Beim Aufschneiden eines solchen Stabendes parallel zur Achse wird erkennbar, daß im Bereich der Erweiterung des Stabes dieser über eine Länge von 1,5 mm teilweise mit der Wand der Schlitze in der Platte verschmolzen ist.

Beispiel 2

Man verwendet die gleiche Platte und die gleichen Stäbe wie in Beispiel 1, wobei jetzt jedoch die Stäbe eine Breite von 39,5 mm aufweisen. Die Stäbe werden wiederum in die Schlitze der Platte derart eingeführt und positioniert, daß diese die Stirnseite der Platte etwa 1,5 mm überragen. Der von der Außenwand der Stäbe und der Wandung der Erweiterungen der Schlitze gebildete keilförmige Spalt wird nun teilweise mit PVDF-Pulver, Typ I, dessen gemittelte Teilchengröße 0,06 mm beträgt, gefüllt. Nach der in Beispiel 1 beschriebenen Wärmebehandlung ist das Pulver geschmolzen. Im Schnitt parallel zur Längsachse des

5

Stabes kann man erkennen, daß der Stab gleichmäßig über eine Tiefe von 1,5 mm mit der Oberfläche des Schlitzes verschmolzen ist.

Beispiel 3

Eine zylindrische Platte mit einem Durchmesser von 150 mm und eine Dicke von 30 mm besteht aus PVDF Typ II. Die Platte weist 1440 durchgehende Bohrungen auf, deren Durchmesser 2 mm beträgt. Auf der einen Oberfläche mit 150 mm Durchmesser der Platte, der Stirnseite, sind alle Borhungen sprungweise erweitert. Diese sprungweisen Erweiterungen weisen einen Durchmesser von 3 mm und eine Tiefe von 0,8 mm auf. In jede Bohrung wird eine Röhre mit einem Außendurchmesser von 2 mm und einer Wandstärke von 0,15 mm eingeführt und derart positioniert, daß die Enden der Röhren die Stirnseite um 1,5 mm überragen. Das Material der Röhren ist PVDF Typ I.

Die Röhren werden vertikal ausgerichtet, so daß die Stirnseite der Platte nach oben zeigt. Auf die Platte und die von den Röhren und den Erweiterungen gebildeten Schlitze wird Polymerpulver des Typs I mit einer gemittelten Teilchengröße von 0,06 mm gestreut, wonach die in Beispiel 1 beschriebene Heizplatte in einem Abstand von 1 cm auf die Stirnseite gerichtet wird. Die Heizplattentemperatur beträgt 430°C. Nach 2 Minuten wird die Heizplatte wieder entfernt. Danach wird die Platte mit den in dieser Platte fest verbundenen Röhren auf Zimmertemperatur abgekühlt.

Beispiel 4

Beispiel 3 wird wiederholt. Es wird nunmehr jedoch eine Platte verwendet, deren Erweiterungen konusförmig ausgebildet sind. Der größe Durchmesser der konusförmigen Erweiterungen, der an der Stirnseite der Platte liegt, beträgt 3 mm, während der Spitzenwinkel des Konus der konusförmigen Erweiterungen 85° beträgt. Jede Röhre weist nach der thermischen Behandlung eine ringförmige Verengung an der Stelle auf, wo in der Platte der Übergang zwischen zylindrischer Bohrung und konusförmiger Erweiterung liegt.

Beispiel 5

Die in Beispiel 1 beschriebene Herstellung eines Wärmetauschers kann unter denselben Verfahrensbedingungen durchgeführt werden, wenn als Werkstoff für die Platte und die Stäbe Polypropylen (PP) gemäß Tabelle verwedent wird.

Die Erfindung wird auch anhand von Figuren erläutert.

Es zeigen:

Figur 1 einen zur thermischen Behandlung vorbereiteten Wärmetauscher, bei dem bereits eine Heizplatte positioniert ist,

Figur 2 den Querschnitt durch eine Verbindungsstelle von einem Rohr mit dem Rohrboden

Figur 3 die perspektivische Darstellung einer Anordnung von flachen Stabenden mit mehreren durchgehenden Öffnungen in einer Stützplatte vor der thermischen Behandlung,

Figure 4 eine weitere perspektivische Darstellung einer möglichen Anordnung von flachen Stäben in einer Stützplatte vor der thermischen Behandlung,

Figur 5 eine perspektivische Darstellung einer möglichen Ausbildung der Stützplatte,

Figur 6 die schematische Darstellung einer Ausführungsform einer Stützplattenöffnung,

Figur 7 bis 13 die Konturen verschiedener möglicher Erweiterungen der Öffnungen der Stützplatte.

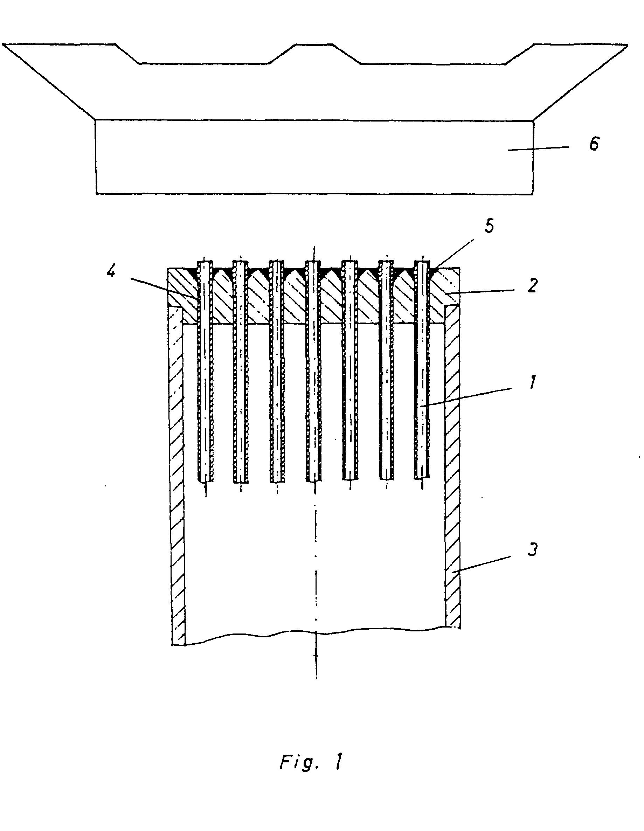

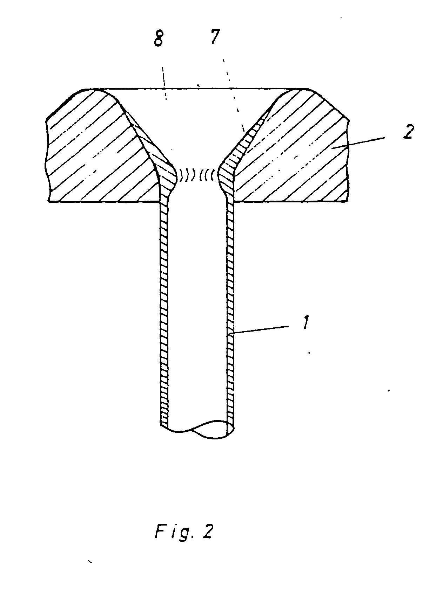

Figur 1 zeigt schematisch den Querschnitt durch einen Wärmetauscher, bei dem gemäß dem erfindungsgemäßen Verfahren in einem Rohrboden (Stützplatte) 2, welcher auf der oberen Seite die Rohre (Stäbe) 1 eingeführt sind, und zwar derart, daß die Rohrenden auf der Stirnseite mit den konischen Erweiterungen (obere Seite) etwa 1,5 mm überstehen. Die von den Enden der Rohre 1 und den konusförmigen Erweiterungen gebildeten Hohlräume sind bereits mit Polymerpulver 5 ausgefüllt. Der so vorbereitete Wärmetauscher wurde bereits mit Hilfe des Gehäuses 3 derart unter eine Heizplatte 6 gestellt, die die Wärmestrahlung zur Durchführung des erfindungsgemäßen Verfahrens liefert, daß die Enden der Rohre vertikal nach oben und die Stützplatte im wesentlichen horizontal angeordnet sind bzw. ist. Nach genügend langer Einwirkungsdauer der Wärmestrahlung sind die Rohrenden mit dem Rohrboden fest verbunden. Die Verbindungsstelle zwischen Rohr und Rohrboden ist in Figur 2 im Querschnitt dargestellt. Im Rohrboden 2 ist das Ende des Rohres 1 angeordnet, wobei das Rohrende im Rohrboden zum Ende hin eine konusförmige Erweiterung 7 und zum kleinsten Querschnitt dieser konischen Erweiterung 7 hin eine ringwulstförmige Verengung 8 aufweist. Das Ende des Rohres 1 ist im Bereich der konusförmigen Erweiterung 7 und der ringwulstförmigen Verengung 8 fest mit dem Rohrboden 2 verklebt.

Die konischen Erweiterungen der Stirnseite können auf einfache Weise dadurch hergestellt werden, daß die Löcher des Rohrbodens angesenkt werden. Die Verbindung zwischen Rohr und Rohrboden weist dann eine besonders gute Festigkeit auf, wenn auch der Rohrboden aus thermoplastischem Material und insbesondere aus demselben thermoplastischen Material wie die Rohre besteht. Die in Figur 2 dargestellte Trennungslinie zwischen Rohrende und Rohrboden ist dann nicht mehr sichtbar, wenn der Öffnungsbereich des Rohrbodens 2 aus thermoplastischem Material besteht, und dem Rohrende soviel Wärme zugeführt wird, daß das Rohrende 7 mit dem Rohrboden 2 verschmolzen ist.

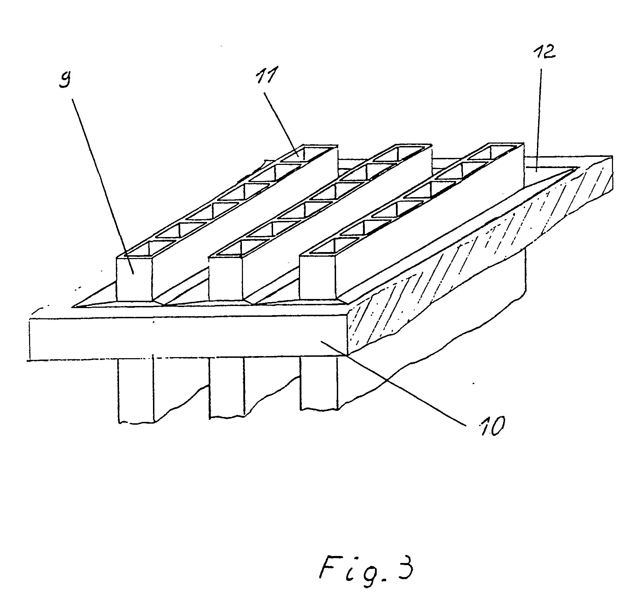

Figur 3 ist die perspektivische Darstellung einer Anordnung von flachen Stabenden 9 in einer Stützplatte 10. Jeder Stab 9 weist hier sechs durchgehende Öffnungen 11 auf. Die Stabenden 9 sind in der

6

# EP 0 226 825 B1

Stützplatte 10 derart positioniert, daß sie stirnseitig die Stützplatte 10 überragen. Die Öffnungen der Stützplatte 10 (nicht sichtbar) weisen zur Stirnseite hin Erweiterungen 12 auf, die derart ausgebildet sind, daß sie die Form eines langgezogenen Pyramidenstumpfes aufweisen.

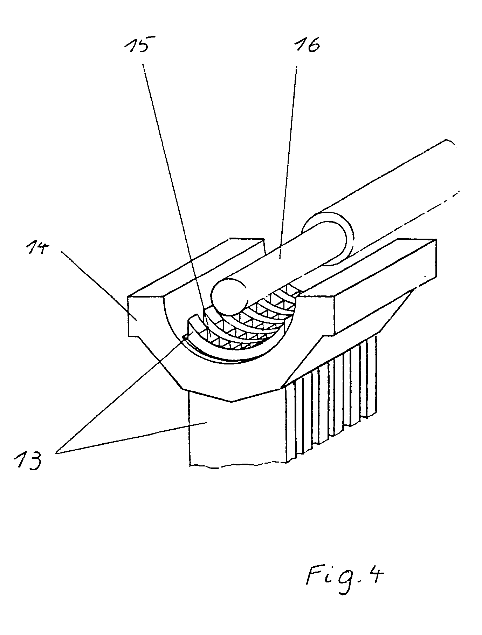

In Figur 4 ist eine weitere perspektivische Darstellung einer möglichen Anordnung von flachen Stäben 13, deren Enden die Kontur eines Kreisringsegments aufweisen, in einer entsprechend geformten Stützplatte 14 dargestellt. Auch diese Stäbe 13 weisen mehrere durchgehende Öffnungen 16 auf. Für die thermische Behandlung einer in Figur 4 dargestellten Anordnung eignet sich besonders ein Heizstab 16, der zur thermischen Behandlung in die in Figur 4 dargestellte Position gebracht wird.

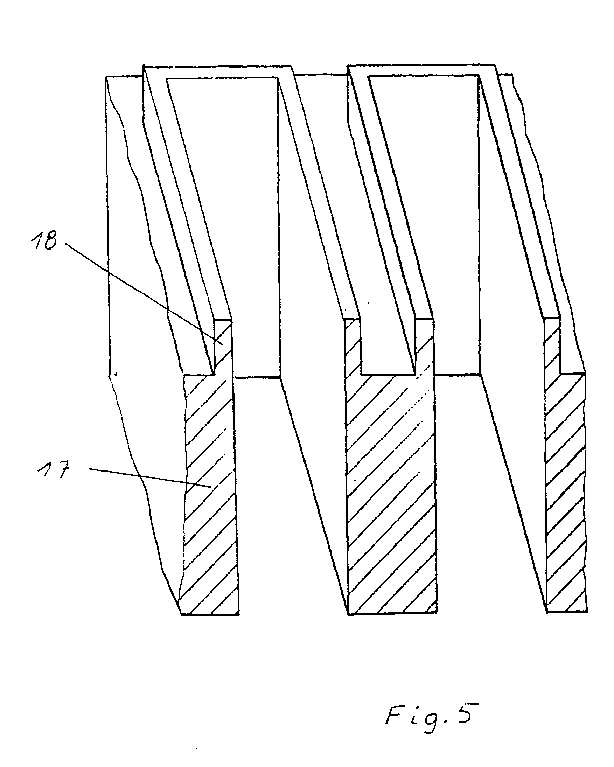

Die Öffnungen der Stützplatte 17 können auch, wie in Figur 5 dargestellt, derart ausgebildet sein, daß diese zur Stirnseite hin über den eigentlichen Stützplattenkörper 17 hinaus durch Stege 18 verlängert sind. Bei Verwendung derartiger Stützplatten wird eine besonders feste Verbindung zwischen Stabenden und Stützplatte erreicht. Dies gilt auch für die in Figur 6 gezeigte Ausführungsform einer Öffnung einer Stützplatte 19, Hier weist die Stützplatte 19/ zur Stirnseite hin eine Erweiterung 20 auf, die im Falle von runden Stäben als konusförmig, im Falle von flachen Stäben als pyramidenstumpfförmig bezeichnet werden kann. Zusätzlich sind in der Erweiterung 20 Stege 21 angeordnet, die eine besonders innige, feste Verschmelzung mit den Stabenden gewährleisten. Die Stege 21 weiten sich zusammen mit den Rohrenden bei der thermischen Behandlung auf, so daß sich die Stege 21 an die Erweiterungen 20 anlegen. Nach der thermischen Behandlung sind die Stege 21 mit der Stützplatte 19 und die Rohrenden mit den Stegen 21 verschmolzen.

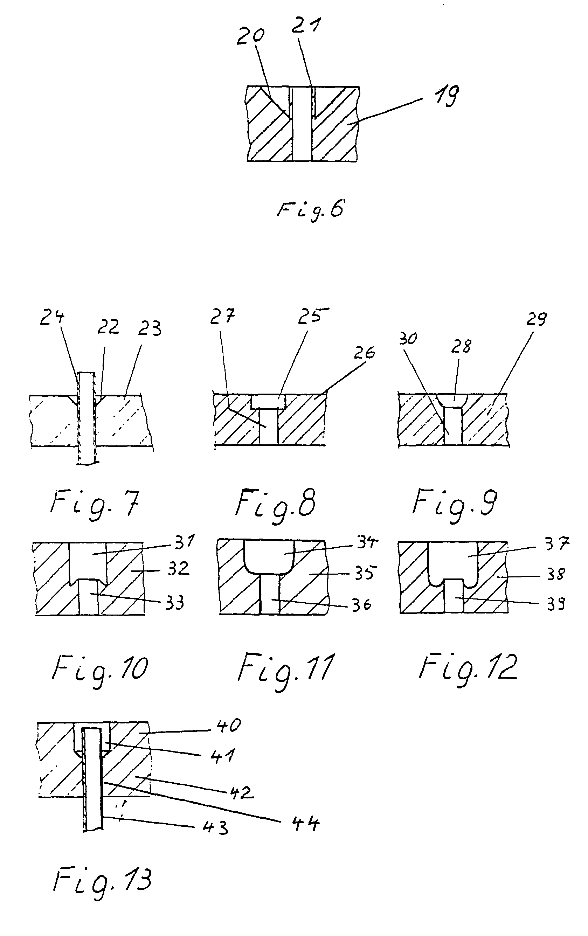

In den Figuren 7 bis 13 sind beispielhaft mögliche Ausführungsformen von Erweiterungen der Stützplattenöffnungen zur Stirnseite hin dargestellt.

In Figur 7 ist in die Stützplatte 23 ein Stabende 24 derart eingeführt, daß das Stabende 24 die Stirnseite der Stützplatte 23 überragt. Die Stützplattenöffnung (nicht bezeichnet) weist eine stetige Erweiterung 22 auf. Im Falle von runden Stäben 24, ergibt sich nach der thermischen Behandlung die Konfiguration von Figur 2.

In den Figuren 8, 10, 11 und 12 sind sprunghafte Erweiterungen 25, 31, 34 bzw. 37 der Öffnungen 27, 33, 36 bzw. 39 in den Stützplatten 26, 32, 35 bzw. 38 dargestellt, während in den Figuren 9 und 13 stetige Erweiterungen 28 bzw. 41 der Öffnungen 30 bzw. 44 in den Stützplatten 29 bzw. 42 dargestellt sind. In Figur 13 reicht das Stabende 43 in die Erweiterung 41 der Stützplatte 42 hinein ohne jedoch die Stirnseite der Stützplatte 42 zu überragen.

## Patentansprüche

1. Verfahren zum bleibenden Befestigen des oder der Enden von mindestens einem mindestens teilweise aus thermoplastischem Kunststoff bestehenden, jeweils mindestens einen durchgehenden Hohlraum aufweisenden Stab in mindestens einer mindestens einen Stab umfassenden Öffnung einer Stützplatte, bei dem jeder Stab zu seiner Befestigung in für ihn vorgesehenen Öffnungen der Stützplatte positioniert wird, anschließend die Stabenden erwärmt, mindestens teilweise erweicht, erweitert und mit der Stützplatte verklebt werden, wobei jeder Stabhohlraum einen hydraulischen Durchmesser aufweist, der mindestens 10% der kleinsten äußeren Querschnittsdimension des Stabes entspreicht, und die Stabwände Poren aufweisen können, die maximal 20% des Wandvolumens ausfüllen, insbesondere zum Herstellen von Wärmetauschern, dadurch gekennzeichnet, daß die Enden der Stäbe im wesentlichen vertikal nach oben und die Stützplatte im wesentlichen horizontal angeordnet werden, daß dann von oben der den Stabenden ohne mechanische Kraftausübung und kontaktlos soviel Wärme zugeführt wird, daß sich die Außenwände der Stabenden nach ihrer Erweichung derart erweitern, daß diese sich an die Wände der Stützplattenöffnungen anlegen und mit diesen verkleben, wobei ein Verkleben des Wärmetauschers mit der Wärmequelle unterbleibt.

2. Verfahren nach Anspruch 1, dadurch gekennzeichnet, daß Stäbe aus einem thermoplastischen Kunststoff verwendet werden, welcher im Bereich zwischen Raumtemperatur und Schmelztemperatur einen mittleren linearen Ausdehnungskoeffizienten zwischen $100 \times 10^{-6}$ und $400 \times 10^{-6}$ l/K besitzt.

3. Verfahren nach Anspruch 1 oder 2, dadurch gekennzeichnet, daß die Stützplatte zumindest im Bereich der Öffnungen aus thermoplastischem Kunststoff besteht, und den Stabenden soviel Wärme zugeführt wird, faß die Stabenden mit der Stützplatte verschmelzen.

4. Verfahren nach einem oder mehreren der Ansprüche 1 bis 3, dadurch gekennzeichnet, daß die thermische Behandlung unter Einhaltung folgender Bedingung durchgeführt wird:

$$0,0175 < Qe \left( \frac{t}{\rho C_p \lambda} \right)^{1/2} < 0,5,$$

wobei

Q die zugeführte Wärmemenge, pro Fläche (Stirnseite) und Zeit in $J/m^2 s$

e der lineare Ausdehnungskoeffizient des Stabmaterials in l/K,

t die Zeitdauer der Wärmeeinwirkung in sec.,

ρ die Dichte des Stabmaterials in $kg/m^3$,

7

$C_p$ die spezifische Wärme des Stabmaterials in J/kg K, und
$\lambda$ die Wärmeleitfähigkeit des Stabmaterials in J/msK ist.

5. Verfahren nach einem oder mehreren der Ansprüche 1 bis 4, dadurch gekennzeichnet, daß Stäbe verwendet werden, die eine Porosität von bis zu 10% des Wandvolumens aufweisen können, deren hydraulischer Durchmesser jeden Hohlraumes zwischen 0,3 und 15 mm und deren Wandstärke an der dünnsten Stelle zwischen 5 und 25% des hydraulischen Durchmessers liegt.

6. Verfahren nach Anspruch 5, dadurch gekennzeichnet, daß der hydraulische Durchmesser der Hohlräume zwischen 0,5 und 7,5 mm liegt.

7. Verfahren nach Anspruch 5 oder 6, dadurch gekennzeichnet, daß die Wandstärke an der dünnsten Stelle zwischen 7,5 und 17,5% des hydraulischen Durchmessers liegt.

8. Verfahren nach einem oder mehreren der Ansprüche 1 bis 7, dadurch gekennzeichnet, daß Stützplatten verwendet werden, deren Öffnungsquerschnittsflächen zumindest zur Stirnseite hin erweitert sind gegenüber dem Außenquerschnitt der verwendeten Stäbe bzw. Stabgruppen, und die Stäbe derart positioniert werden, daß die Stabenden Zumindest in die Erweiterungen der Stützplattenöffnungen hineinrichen.

9. Verfahren nach einem oder mehreren der Ansprüche 1 bis 8, dadurch gekennzeichnet, daß die Stäbe vor der thermischen Behandlung derart in den Öffnungen der Stützplatte positioniert werden, daß die Stabenden die Stirnseite der Stützplatte 1 bis 2 mm überragen.

10. Verfahren nach Anspruch 8 oder 9, dadurch gekennzeichnet, daß nach dem Positionieren jedoch vor der thermischen Behandlung der Stäbe ein gegebenenfalls vorhandener Zwischenraum zwischen Außenmantel der Stäbe und der Öffnungen der Stützplatte zumindest teilweise mit Polymerpulver ausgefüllt wird.

11. Verfahren nach einem oder mehreren der Ansprüche 1 bis 10, dadurch gekennzeichnet, daß Stützplatte, Stäbe und gegebenenfalls das Polymerpulver aus Polymeren bestehen, die denselben oder nahezu denselben Schmelzpunkt bzw. Schmelzbereich besitzten.

12. Verfahren nach Anspruch 10 oder 11, dadurch gekennzeichnet, daß Polymerpulver verwendet wird, welches eine Schmelztemperatur besitzt, die etwa 5 bis 50°C unterhalb der Schmelztemperatur des Stabwerkstoffes liegt.

13. Verfahren nach Anspruch 12, dadurch gekennzeichnet, daß Polymerpulver verwendet wird, welches eine Schmelztemperatur besitzt, die etwa 20 bis 50°C unterhalb der Schmelztemperatur des Stabwerkstoffes liegt.

14. Verfahren nach einem oder mehreren der Ansprüche 10 bis 13, dadurch gekennzeichnet, daß Polymerpulver mit einer durchschnittlichen Teilchengröße von 20 bis 100 µm verwendet wird.

15. Verfahren nach Anspruch 14, dadurch gekennzeichnet, daß Polymerpulver mit einer durchschnittlichen Teilchengröße von 40 bis 100 µm verwendet wird.

16. Verfahren nach einem oder mehreren der Ansprüche 1 bis 15, dadurch gekennzeichnet, daß Stützplatte, Stäbe und gegebenenfalls das Polymerpulver aus thermoplastischen Polymeren bestehen, die von ihrer Grundstruktur zu derselben Polymersorte gehören.

17. Wärmetauscher, bestehend aus einer Anzahl von thermoplastischen, jeweils mindestens einen durchgehenden Hohlraum aufweisenden Stäben, deren Enden bleibend mit mindestens einer Stützplatte verbunden sind, wobei sich die Hohlräume zum Ende der thermoplastischen Stäbe hin erweitern und dessen Stirnseite ein kreppsohlenartiges Aussehen aufweist, herstellbar nach dem Verfahren gemäß einem oder mehreren der Ansprüche 1 bis 16.

18. Wärmetauscher nach Anspruch 17, dadurch gekennzeichnet, daß jedes Stabende mit der Stützplatte zumindest bis zu einer Tiefe, die der dünnsten Wandstärke des Stabes entspricht, von der Stirnseite der Stützplatte her verschmolzen ist.

19. Wärmetauscher nach Anspruch 17 oder 18, dadurch gekennzeichnet, daß das Stabmaterial derart mit dem Stützplattenmaterial verschmolzen ist, daß ein stetiger Übergang zwischen den beiden Materialien erfolgt.

20. Wärmetauscher nach einem oder mehreren der Ansprüche 17 bis 19, dadurch gekennzeichnet, daß die Stäbe als Röhren ausgebildet sind.

21. Wärmetauscher nach einem oder mehreren der Ansprüche 17 bis 19, dadurch gekennzeichnet, daß zu Gruppen zusammengesetzte Rohre als Stäbe enthalten sind.

22. Wärmetauscher nach Anspruch 21, dadurch gekennzeichnet, daß die Röhrengruppe aus nebeneinanderliegenden Röhren gebildet wird, deren Achsen auf einer (gedachten) spiralförmigen Linie angeordnet sind.

23. Wärmetauscher nach Anspruch 21 oder 22, dadurch gekennzeichnet, daß jeder Röhrengruppe aus 2 bis 100 000 Röhren besteht.

24. Wärmetauscher nach Anspruch 23, dadurch gekennzeichnet, daß jede Röhrengruppe aus 2 bis 20 000 Röhren besteht.

25. Wärmetauscher nach einem oder mehreren der Ansprüche 17 bis 24, dadurch gekennzeichnet, daß jede Erweiterung des Innenquerschnitts der Stabenden sich in Richtung des Stabinneren auf einen Querschnitt verengt, dessen Fläche etwa 10 bis 60% von der Fläche des Innenquerschnitts beträgt, bevor sie auf den Stabinnenquerschnitt übergeht.

26. Wärmetauscher nach Anspruch 25, dadurch gekennzeichnet, daß die Fläche des verengten Querschnitts etwa 20 bis 50% von der Fläche des Innenquerschnitts beträgt.

27. Wärmetauscher nach einem oder mehreren der Ansprüche 17 bis 26, dadurch gekennzeichnet, daß er zumindest teilweise aus thermoplastischem Polymer besteht, welches zu den Fluorpolymeren gehört.

28. Wärmetauscher nach einem oder mehreren der Ansprüche 17 bis 26, dadurch gekennzeichnet, daß er zumindest teilweise aus Polyäthylen besteht.

29. Wärmetauscher nach einem oder mehreren der Ansprüche 17 bis 26, dadurch gekennzeichnet, daß er zumindest teilweise aus Polypropylen besteht.

**Revendications**

1. Procédé pour fixer durablement l'extrémité ou les extrémités d'au moins une tige, se composant au moins partiellement d'un matériau thermoplastique et comportant au moins un passage creux traversant, dans au moins un orifice, recevant au moins une tige, d'une plaque de support, dans lequel chaque tige est mise en place pour être fixée dans des orifices de la plaque de support prévus pour ladite tige, puis les extrémités de tige sont chauffées, au moins partiellement ramollies, élargies et collées avec la plaque de support, chaque passage creux de tige présentant un diamètre hydraulique qui correspond au moins à 10% de la plus petite dimension extérieure de section transversale de la tige, et les parois de tige pouvant comporter des pores qui remplissent au maximum 20% du volume des parois, en particulier pour fabriquer des échangeurs de chaleur, caractérisé en ce que les extrémités des tiges sont disposées essentiellement verticalement vers le haut et la plaque de support est disposée essentiellement horizontalement, puis de la chaleur est amenée sur les extrémités de tiges par le haut, sans contact, sans application de force mécanique et en quantité telle que les parois extérieures des extrémités de tiges sont élargies, après leur ramollissement, de manière telle que celles-ci s'appliquent contre les parois des orifices de la plaque de support et y adhèrent sans que l'échangeur de chaleur adhère à la source de chaleur.

2. Procédé selon la revendication 1, caractérisé en ce qu'on utilise des tiges constituées d'un matériau thermoplastique qui, dans la plage allant de la température ambiante à sa température de fusion, possède un coefficient de dilatation linéaire moyen compris entre $100 \times 10^{-6}$ et $400 \times 10^{-6}$ l/K.

3. Procédé selon la revendication 1 ou 2, caractérisé en ce que la plaque de support est constituée d'un matériau thermoplastique au moins dans la zone des orifices et la chaleur amenée sur les extrémités de tiges est en quantité telle que les extrémités de tiges fusionnent avec la plaque de support.

4. Procédé selon l'une ou plusieurs des revendications 1 à 3, caractérisé en ce qu'on réalise le traitement thermique en respectant la condition suivante:

$$0{,}0175 < Qe \left( \frac{t}{\rho C_p \lambda} \right)^{1/2} < 0{,}05,$$

dans laquelle,

Q est la quantité de chaleur amenée, par unité de surface (côté frontal) et de temps, en $J/m^2 \cdot s$,

e est le coefficient de dilatation linéaire du matériau des tiges, en l/K,

t est la durée de l'action de la chaleur, en secondes,

$\rho$ est la masse volumique du matériau des tiges, en $kg/m^3$,

$C_p$ est la chaleur spécifique du matériau des tiges, en $J/kg \cdot K$ et

$\lambda$ est la conductibilité thermique du matériau des tiges, en J/msK.

5. Procédé selon l'une ou plusieurs des revendications 1 à 4, caractérisé en ce qu'on utilise des tiges qui peuvent présenter une porosité pouvant aller jusqu'à 10% du volume des parois, dont le diamètre hydraulique de chaque passage creux est compris entre 0,3 et 15 mm et dont l'épaisseur de paroi à l'endroit le plus mince est de 5 à 25% du diamètre hydraulique.

6. Procédé selon la revendication 5, caractérisé en ce que le diamètre hydraulique des passages creux est compris entre 0,5 et 7,5 mm.

7. Procédé selon la revendication 5 ou 6, caractérisé en ce que l'épaisseur de paroi à l'endroit le plus mince est de 7,5 à 17,5% du diamètre hydraulique.

8. Procédé selon l'une ou plusieurs des revendications 1 à 7, caractérisé en ce qu'on utilise des plaques de support dont les aires de section transversale des orifices sont élargies au moins en direction du côté frontal par rapport à la section transversale extérieure des tiges ou des groupes de tiges utilisés, et les tiges sont positionnées de manière telle que les extrémités de tiges pénètrent au moins dans les élargissements des orifices des plaques de support.

9. Procédé selon l'une ou plusieurs des revendications 1 à 8, caractérisé en ce que les tiges sont mises en place dans les orifices de la plaque de support, avant le traitement thermique, de manière telle que les extrémités de tiges dépassent du côté frontal de la plaque d'appui de 1 à 2 mm.

10. Procédé selon la revendication 8 ou 9, caractérisé en ce qu'on espace intermédiaire éventuellement formé entre la paroi extérieure des tiges et les orifices de la plaque de support est comblé au moins partiellement au moyen d'une poudre de polymère après le positionnement des tiges mais avant le traitement thermique de celles-ci.

11. Procédé selon l'une ou plusieurs des revendications 1 à 10, caractérisé en ce que la plaque de support, les tiges et, le cas échéant, la poudre de polymère se composent de polymères qui possèdent le même ou presque le même point de fusion ou plage de fusion.

12. Procédé selon la revendication 10 ou 11, caractérisé en ce qu'on utilise de la poudre de polymère qui présente un point de fusion qui se situe approximativement de 5 à 50°C au-dessous du point de fusion du matériau des tiges.

13. Procédé selon la revendication 10 ou 11, caractérisé en ce qu'on utilise de la poudre de polymère qui présente un point de fusion qui se situe approximativement de 20 à 50°C au-dessous du point de fusion du matériau des tiges.

14. Procédé selon l'une ou plusieurs des revendications 10 à 13, caractérisé en ce qu'on utilise de la poudre de polymère ayant une grosseur moyenne de particules comprise entre 20 et 100 µm.

15. Procédé selon la revendication 14, caractérisé en ce qu'on utilise de la poudre de polymère ayant une grosseur moyenne de particules comprise entre 40 et 100 µm.

16. Procédé selon l'une ou plusieurs des revendications 1 à 15, caractérisé en ce que la plaque de support, les tiges et, le cas échéant, la poudre de polymère se composent de polymères thermoplastiques qui, par leur structure fondamentale, appartiennent à la même sorte de polymères.

17. Echangeur de chaleur, composé d'une série de tiges thermoplastiques, présentant respectivement au moins une passage creux traversant, dont les extrémités sont reliées de manière permanente à au moins un plaque de support, dans lequel les passages creux s'élargissent en direction de l'extrémité des tiges thermoplastiques et dont le côté frontal présente un aspect du type semelle de crêpe, pouvant être fabriqué selon le procédé de l'une ou plusieurs des revendications 1 à 16.

18. Echangeur de chaleur selon la revendication 17, caractérisé en ce que chaque extrémité de tige est fusionnée avec la plaque de support, depuis le côté frontal de ladite plaque de support, au moins sur une profondeur qui correspond à l'épaisseur minimale de paroi de la tige.

19. Echangeur de chaleur selon la revendication 17 ou 18, caractérisé en ce que le matériau des tiges est fusionné avec le matériau de la plaque de support de manière telle qu'il se produise une jonction permanente entre les deux matériaux.

20. Echangeur de chaleur selon l'une ou plusieurs des revendications 17 à 19, caractérisé en ce que les tiges sont conformées en tubes.

21. Echangeur de chaleur selon l'une ou plusieurs des revendications 17 à 19, caractérisé en ce que des tubes assemblés en groupes sont contenus en tant que tiges.

22. Echangeur de chaleur selon la revendication 21, caractérisé en ce que les groupes de tubes sont formés de tubes juxtaposés dont les axes sont situés sur une ligne (imaginaire) hélicoïdale.

23. Echangeur de chaleur selon la revendication 21 ou 22, caractérisé en ce que chaque groupe de tubes se compose de 2 à 100.000 tubes.

24. Echangeur de chaleur selon la revendication 23, caractérisé en ce que chaque groupe de tubes se compose de 2 à 20.000 tubes.

25. Echangeur de chaleur selon l'une ou plusieurs des revendications 17 à 24, caractérisé en ce que chaque élargissement de la section transversale intérieure des extrémités de tiges se resserre en direction de l'intérieur des tiges jusqu'à atteindre une section transversale dont l'aire est d'environ 10 à 60% de l'aire de la section transversale intérieure, avant que ladite section transversale resserrée ne se prolonge par la section transversale intérieure des tiges.

26. Echangeur de chaleur selon la revendication 25, caractérisé en ce que l'aire de la section transversale resserrée est d'environ 20 à 50% de l'aire de la section transversale intérieure.

27. Echangeur de chaleur selon l'une ou plusieurs des revendications 17 à 26, caractérisé en ce qu'il se compose au moins partiellement d'un polymère thermoplastique qui appartient aux polymères fluorés.

28. Echangeur de chaleur selon l'une ou plusieurs des revendications 17 à 26, caractérisé en ce qu'il se compose au moins partiellement de polyéthylène.

29. Echangeur de chaleur selon l'une ou plusieurs des revendications 7 à 26, caractérisé en ce qu'il se compose au moins partiellement de polypropylène.

**Claims**

1. A method for permanently securing the end or ends of at least one rod made at least partially of thermoplastic plastics material and comprising at least one continuous cavity in each case, in at least one opening of a support plate enclosing at least one rod, wherein for its securing, each rod is positioned in openings in the support plate provided to this end, the rod ends are then heated, at least partially softened, expanded and bonded with the support plate, each rod cavity having a hydraulic diameter, which corresponds to at least 10% of the smallest external cross sectional dimension of the rod, and the rod walls can comprise pores forming a maximum of 20% of the wall volume, more particularly for manufacturing heat exchangers, characterised in that the ends of the rods are arranged so as to point essentially vertically upwards and the support plate is arranged essentially horizontal, in that without the application of mechanical force and without contact, heat is then applied to the rod ends from above in such a quantity that the outer walls of the rod ends expand after softening in such a manner that they come to rest against the walls of the support plate openings and bond therewith, a bonding of the heat exchanger with the heat source being avoided.

2. A method according to claim 1, characterised in that rods are used made of a thermoplastic plastics material, which in the range between room temperature and melting temperature has a mean coefficient of linear expansion of between $100 \times 10^{-6}$ and $400 \times 10^{-6}$ I/K.

3. A method according to claim 1 or 2, characterised in that the support plate is made of thermoplastic plastics material at least in the region of the openings, and the rod ends are supplied with heat in such a quantity that the rod ends fuse with the support plate.

4. A method according to one or more of claims 1 to 3, characterised in that the heat treatment is carried out under the following conditions:

$$0.0175 < Qe \ \left( \frac{t}{\rho C_p \lambda} \right)^{1/2} < 0,5,$$

where

Q=the supplied quantity of heat, per surface area (end face) and time in $J/m^2s$,
e=the coefficient of linear expansion of the rod material in I/K,
t=the duration of the heat effect in seconds,
$\rho$=the density of the rod material in $kg/m^3$,
$C_p$=the specific heat of the rod material in J/kg K, and
$\lambda$=the thermal conductivity of the rod material in J/msK.

5. A method according to one or more of claims 1 to 4, characterised in that rods are used, which can have a porosity of up to 10% of the wall volume, whose hydraulic diameter of each cavity lies between 0.3 and 15 mm and whose wall thickness at the thinnest point lies between 5 and 25% of the hydraulic diameter.

6. A method according to claim 5, characterised in that the hydraulic diameter of the cavities lies between 0.5 and 7.5 mm.

7. A method according to claim 5 or 6, characterised in that the wall thickness at the thinnest point lies between 7.5 and 17.5% of the hydraulic diameter.

8. A method according to one or more of claims 1 to 7, characterised in that support plates are used, whose cross sectional areas of openings are enlarged at least towards the end face relative to the outer cross section of the rods or groups of rods used, and the rods are positioned in such a manner that the rod ends extend at least into the enlarged portions of the support plate openings.

9. A method according to one or more of claims 1 to 8, characterised in that prior to the heat treatment, the rods are positioned in the openings of the support plate in such a manner that the rod ends extend beyond the end face of the support plate by 1 to 2 mm.

10. A method according to claim 8 or 9, characterised in that after positioning but before the heat treatment of the rods, an intermediate cavity which may optionally be present between the outer surface of the rods and the openings of the support plate is at least partially filled with polymer powder.

11. A method according to one or more of claims 1 to 10, characterised in that the support plate, rods and optionally the polymer powder are made of polymers having the same or approximately the same melting point or melting range.

12. A method according to claim 10 or 11, characterised in that polymer powder is used having a melting temperature which lies approximately 5 to 50°C below the melting temperature of the rod material.

13. A method according to claim 12, characterised in that polymer powder is used having a melting temperature which lies approximately 20 to 50°C below the melting temperature of the rod material.

14. A method according to one or more of claims 10 to 13, characterised in that polymer powder is used having an average particle size of between 20 and 100 µm.

15. A method according to claim 14, characterised in that polymer powder is used having an average particle size of between 40 and 100 µm.

16. A method according to one or more of claims 1 to 15, characterised in that the support plate, rods and optionally the polymer powder are made of thermoplastic polymers which according to their basic structure belong to the same polymer type.

17. A heat exchanger consists of a plurality of thermoplastic rods which comprise at least one continuous cavity in each case and whose ends are permanently bonded with at least one support plate, the cavities widening towards the end of the thermoplastic rods, and the end face of the heat exchanger having a crepe sole-like appearance, manufacturable according to the method according to one or more of claims 1 to 16.

18. A heat exchanger according to claim 17, characterised in that each rod end is fused with the support plate from the end face of the support plate at least to a depth corresponding to the thinnest wall thickness of the rod.

19. A heat exchanger according to claim 17 or 18, characterised in that the rod material is fused with the support plate material in such a manner that a continuous transition is formed between the two materials.

20. A heat exchanger according to one or more of claims 17 to 19, characterised in that the rods are designed as tubes.

21. A heat exchanger according to one or more of claims 17 to 19, characterised in that it comprises tubes as rods which are joined together to form groups.

22. A heat exchanger according to claim 21, characterised in that the tube groups are formed by adjacent tubes, whose axes are arranged on an (imaginary) helical line.

23. A heat exchanger according to claim 21 or 22, characterised in that each group of tubes consists of between 2 and 100,000 tubes.

24. A heat exchanger according to claim 23, characterised in that each tube group consists of between 2 and 20,000 tubes.

25. A heat exchanger according to one or more of claims 17 to 24, characterised in that each enlarged portion of the internal cross section of the rod ends narrows in the direction of the rod interior to a cross section, whose surface area is approximately 10 to 60% of the surface area of the internal cross section before it passes into the internal rod cross section.

26. A heat exchanger according to claim 25, characterised in that the surface area of the reduced cross section is approximately 20 to 50% of the surface area of the internal cross section.

27. A heat exchanger according to one or more of claims 17 to 26, characterised in that it is at least partially made of a thermoplastic polymer which belongs to the fluorine polymers.

28. A heat exchanger according to one or more of claims 17 to 26, characterised in that it is made at least partially of polyethylene.

29. A heat exchanger according to one or more of claims 17 to 26, characterised in that it is made at least partially of polypropylene.

*Fig. 1*

Fig. 2

Fig. 3

15    16

14

13

Fig.4

18

17

Fig. 5

20 21

19

Fig. 6

24 22 23

27 25

26

30 28

29

Fig. 7

Fig. 8

Fig. 9

31
32
33

34
35
36

37
38
39

Fig. 10

Fig. 11

Fig. 12

40
41

42

43 44

Fig. 13